# EUROPÄISCHE PATENTANMELDUNG

(11) **EP 1 760 330 A1**
(43) Veröffentlichungstag der Anmeldung: **07.03.2007**
(21) Anmeldenummer: 06118664.9
(22) Anmeldetag: 09.08.2006
(51) Int. Cl.: F16B 13/00

(54) **Befestigungselement für harte Untergründe**

(30) Priorität: 02.09.2005 DE 102005000109
(71) Anmelder: HILTI Aktiengesellschaft, 9494 Schaan (LI)
(72) Erfinder: Allaart, Jan, 9493, Mauren (LI); Glogger, Josef, 86807, Buchloe (DE); Huber, Franz-Xaver, 82294, Günzlhofen (DE); Martin, Volker, 6800, Feldkirch (AT); Radl, Michael, 6845, Hohenems (AT); Wieser, Jürgen, 86916, Kaufering (DE)
(74) Vertreter: Wildi, Roland

(57) **Zusammenfassung**

Ein Befestigungselement (11) für harte Untergründe, wie z. B. Beton, weist einen zylinderförmigen Grundkörper (12) auf, der sich entlang einer Längsachse (13) erstreckt und der ein erstes Ende (14) sowie ein zweites, dem ersten Ende (14) abgewandtes Ende (15) aufweist. An einer Aussenseite (16) des Grundkörpers (12) ist ein selbstschneidendes Gewinde (17) vorgesehen. Der Grundkörper (12) weist weiter ein innenliegendes Angriffsmittel (18) für ein Setzwerkzeug sowie eine zum zweiten Ende (15) offene Aufnahme (19) auf, die mit einem Lastangriffsmittel (20) versehen ist. Radial aussen ist ein Bund (21) an dem zweiten Ende (15) des Grundkörpers (12) vorgesehen.

## Beschreibung

### Technisches Gebiet

Die Erfindung betrifft ein Befestigungselement für harte Untergründe, wie Beton, Mauerwerk und dergleichen, der im Oberbegriff des Patentanspruchs 1 genannten Art.

### Stand der Technik

Ein derartiges Befestigungselement dient der Befestigung in harten Untergründen, wie Beton, Mauerwerk und dergleichen. Das Befestigungselement wird in ein zuvor erstelltes Bohrloch in den Untergrund mittels eines geeigneten Setzwerkzeugs eingeschraubt, wobei das selbstschneidende Gewinde ein komplementäres Gewinde in dem Untergrund beziehungsweise in der Bohrlochwandung erstellt. Das Befestigungselement ist über den erzeugten Hinterschnitt im Untergrund verankert. Das in der Aufnahme vorgesehene Lastangriffsmittel ist beispielsweise ein Innengewinde, in welches zur Erstellung der Befestigung ein Befestigungsmittel, wie eine Gewindestange oder eine Schraube eindrehbar ist. Anstelle eines Innengewindes kann als Lastangriffsmittel auch ein Bajonettverschluss vorgesehen sein.

Aus der EP 1 536 149 A2 ist ein gattungsgemässes Befestigungselement bekannt, das einen zylinderförmigen Grundkörper umfasst, der sich entlang einer Längsachse erstreckt und der ein erstes, in Setzrichtung des Befestigungselementes liegendes Ende mit einem Bodenabschnitt sowie ein zweites, dem ersten Ende abgewandtes Ende aufweist. An der Aussenseite des Grundkörpers ist ein selbstschneidendes Gewinde vorgesehen. Der Grundkörper weist ein innenliegendes Angriffsmittel für ein Setzwerkzeug sowie eine zum zweiten Ende offene Aufnahme auf, die mit einem Lastangriffsmittel versehen ist.

Nachteilig an der bekannten Lösung ist, dass bei einem mehrfachen Justieren durch Ein- und Ausdrehen des Befestigungselementes der Sitz und somit die Verankerung des Befestigungselementes gelockert wird. Wird anschliessend ein Befestigungsmittel, wie beispielsweise eine Gewindestange, in das als Lastangriffsmittel dienende Innengewinde eingedreht und dieses nochmals zurückgedreht, so wird gegebenenfalls dabei ebenfalls das gesetzte Befestigungselement aus dem Bohrloch herausgedreht.

### Darstellung der Erfindung

Aufgabe der Erfindung ist es, ein Befestigungselement für harte Untergründe zu schaffen, das einen festen Sitz im Bohrloch aufweist und bei dem infolge Zurückdrehens eines Befestigungsmittels dieses nicht ungewollt aus dem Bohrloch ausgedreht wird.

Die Aufgabe ist durch die Merkmale des unabhängigen Anspruchs gelöst. Vorteilhafte Weiterbildungen sind in den Unteransprüchen dargelegt.

Gemäss der Erfindung ist radial aussen ein Bund an dem zweiten Ende des Grundkörpers vorgesehen.

Mit dem Bund wird eine zusätzliche Kontaktfläche zwischen dem Befestigungselement und dem harten Untergrund geschaffen, die aufgrund des erhöhten Reibschlusses im gesetzten Zustand des Befestigungsmittels dieses gegen ein ungewolltes Ausdrehen aus dem Bohrloch zusätzlich sichert. Zudem ermöglicht der Bund das Setzen des Befestigungselementes in einer definierten Endlage, wobei der Bund als Anschlag dient und ein ungewollt zu tiefes Setzen des Befestigungselementes verhindert. Der Bund ermöglicht zudem eine einfache visuelle Kontrolle der Setzposition des Befestigungselementes, was den Setzvorgang wesentlich vereinfacht. Durch den Bund ist das erfindungsgemässe Befestigungselement auch in Hohluntergründe setzbar, ohne dass die Gefahr besteht, dass das Befestigungselement beim Setzen in eine von aussen nicht mehr zugängliche Hohlkammer fällt und für eine weitere Verwendung verloren ist.

Vorzugsweise ist die radiale Erstreckung des Bundes 8% bis 35% grösser als ein Kerndurchmesser des Grundkörpers, womit ein so genanntes "Durchziehen" ins Bohrloch beim Setzvorgang des Befestigunselementes weitgehend verhindert wird. Unter Kerndurchmesser des Grundkörpers wird in diesem Zusammenhang der Aussendurchmesser des zylinderförmigen Grundkörpers ohne das selbstschneidende Gewinde bzw. der Durchmesser am Gewindegrund gemessen verstanden.

Bevorzugt weist der Bund eine axiale Erstreckung auf, die 5% bis 15% des Kerndurchmessers des Grundkörpers entspricht. Der Bund weist dadurch eine ausreichende Steifigkeit auf. Der Bund wird somit beim Setzen nicht ungewollt verformt, wenn dieser mit dem Untergrund in Anlage kommt.

Vorzugsweise weist der Bund umfangseitig eine Aussenkontur auf, so dass der Bund eine grösstmögliche Kontaktfläche mit dem Untergrund aufweist. Beim vorgängigen Erstellen des Bohrlochs in harten Untergründen brechen üblicherweise im Bereich des Bohrlochmundes Teile des Untergrundes weg, so dass der Bohrlochmund einen so genannten Ausbruchkegel aufweist, der sich von der Aussenseite des Untergrundes bis zum gewünschten Nenndurchmesser des Bohrlochs erstreckt. Die umfangseitige Aussenkontur des Bundes entspricht vorteihafterweise der aufgrund der Materialeigenschaften des Untergrundes zu erwartenden Kontur des Ausbruchkegels am Bohrlochmund. Beispielsweise weist der Bund umfangseitig eine zylindrische, konische oder ballige Aussenkontur auf.

Bevorzugt weist der Bund eine, dem ersten Ende zugewandte Anlageseite auf, die mit einer Kontur versehen ist. Im gesetzten Zustand des erfindungsgemässen Befestigungselementes, wenn die, dem ersten Ende zugewandte Anlageseite mit dem Untergrund in Anlage steht, wird dadurch der Reibschluss zwischen der Anlageseite und dem Untergrund wesentlich erhöht, so dass das Befestigungselement zusätzlich gegen ein ungewolltes Ausdrehen aus dem Bohrloch gesichert ist. Die Kontor an der Anlageseite kann verschiedene Geometrien umfassen und weist beispielsweise Kerben, Sägezähne und/oder eine Rändelung auf.

### Kurze Beschreibung der Zeichnungen

Die Erfindung wird nachstehend anhand mehrerer Ausführungsbeispiele näher erläutert. Es zeigen:
- Fig. 1: Eine Seitenansicht eines ersten Ausführungsbeispiels eines erfindungsgemässen Befestigungselementes;
- Fig. 2: eine Seitenansicht eines zweiten Ausführungsbeispiels des erfindungsgemässen Befestigungselementes;
- Fig.3: eine Seitenansicht eines dritten Ausführungsbeispiels des erfindungsgemässen Befestigungselementes;
- Fig.4: eine Detailansicht auf ein Ausführungsbeispiel eines Bunds des Befestigungselementes gem. Fig. 2; und
- Fig.5: eine Detailansicht auf ein weiteres Ausführungsbeispiel eines Bunds des Befestigungselementes gem. Fig. 1.

Grundsätzlich sind in den Figuren gleiche Teile mit den gleichen Bezugszeichen versehen.

### Wege zur Ausführung der Erfindung

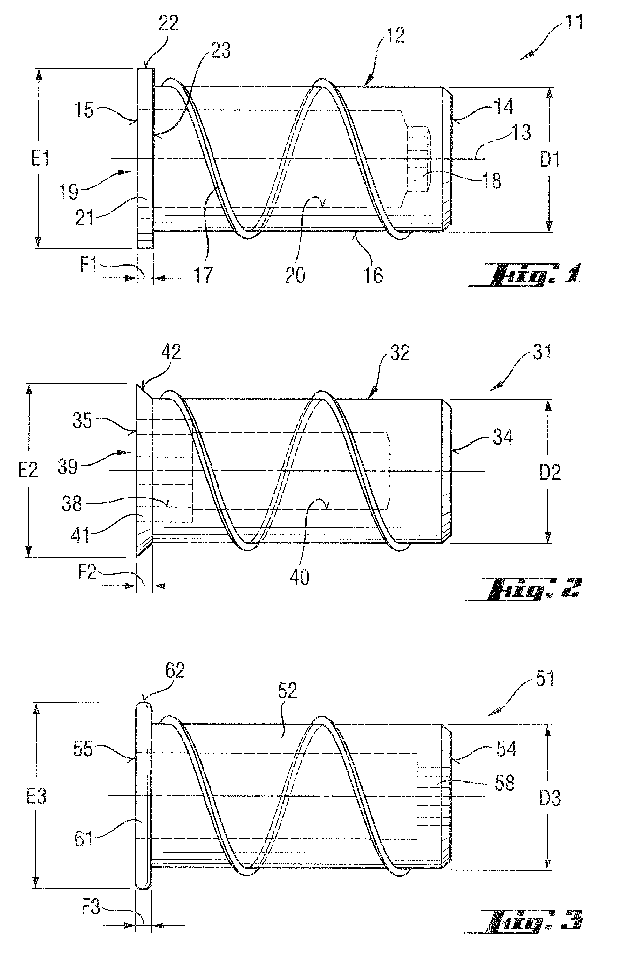

Das in Figur 1 dargestellte Befestigungselement 11 für harte Untergründe weist einen zylinderförmigen Grundkörper 12 auf, der sich entlang einer Längsachse 13 erstreckt und der ein erstes Ende 14 sowie ein zweites, dem ersten Ende 14 abgewandetes zweites Ende 15 aufweist. An der Aussenseite 16 des Grundkörpers 12 ist ein selbstschneidendes Gewinde 17 vorgesehen. Der Grundkörper 12 weist weiter ein innenliegendes Angriffsmittel 18 für ein Setzwerkzeug sowie eine zum zweiten Ende 15 offene Aufnahme 19 auf, die mit einem Lastangriffsmittel 20, z. B. einem Innengewinde, versehen ist. An dem zweiten Ende 15 des Grundkörpers 12 ist radial aussen ein Bund 21 vorgesehen, der umfangseitig eine zylindrische Aussenkontur 22 aufweist. Die radiale Erstreckung E1 des Bundes 21 ist etwa 20% grösser als der Kerndurchmesser D1 des Grundkörpers 12. Die axiale Erstreckung F1 des Bundes 21 entspricht etwa 10% des Kerndurchmessers D1 des Grundkörpers 12.

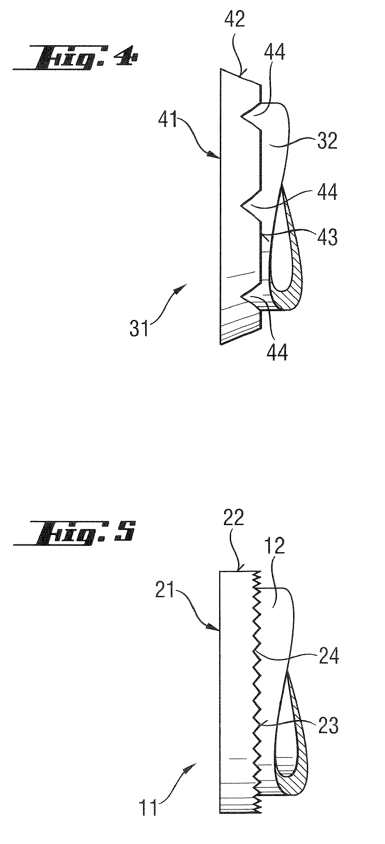

Wie in Fig. 5 gezeigt, kann der Bund 21 an einer, dem ersten Ende 14 zugewandten Anlageseite 23 eine Kontur 24 in Form einer Rändelung aufweisen.

Das in Figur 2 dargestellte Befestigungselement 31 für harte Untergründe entspricht im Wesentlichen dem in Figur 1 dargestellten Befestigungselement 11. Im Unterschied dazu ist jedoch das Befestigungselement 31 am zweiten Ende 35 des zylinderförmigen Grundkörpers 32 radial aussen mit einem Bund 41 versehen, der umfangseitig eine konische Aussenkontur 42 aufweist. Das innenliegende Angriffsmittel 38 für ein Setzwerkzeug ist am zweiten Ende 35 des Grundkörpers 32 vorgesehen. Die zum zweiten Ende 35 offene Aufnahme 39, die mit einem Lastangriffsmittel 40 versehen ist, schliesst sich an das innenliegende Angriffsmittel 38 an und erstreckt sich in Richtung des ersten Endes 34. Die radiale Erstreckung E2 des Bundes 41 ist etwa 10% grösser als der Kerndurchmesser D2 des Grundkörpers 32. Die axiale Erstreckung F2 des Bundes 41 entspricht etwa 15% des Kerndurchmessers D2 des Grundkörpers 32.

Wie in Fig.4 gezeigt, kann der Bund 41 an der, dem ersten Ende 34 zugewandten Anlageseite 43 eine Kontur 44 in Form mehreren Kerben aufweisen.

Das in der Figur 3 dargestellte Befestigungselement 51 für harte Untergründe unterscheidet sich von den zuvor beschriebenen Ausführungsformen lediglich durch den am zweiten Ende 55 des Grundkörpers 52 angeordneten Bund 61, der umfangseitig eine ballige Aussenkontur 62 aufweist und durch die Anordnung des innenliegenden Angriffsmittels 58 für das Setzwerkzeug am ersten Ende 55 des Grundkörpers 52. Die radiale Erstreckung E3 des Bundes 61 ist etwa 30% grösser als der Kerndurchmesser D3 des Grundkörpers 52. Die axiale Erstreckung F3 des Bundes 61 entspricht etwa 8% des Kerndurchmessers D3 des Grundkörpers 52.

## Patentansprüche

1. Befestigungselement für harte Untergründe, wie Beton, Mauerwerk und dergleichen, mit einem zylinderförmigen Grundkörper (12; 32; 52), der sich entlang einer Längsachse (13) erstreckt und der ein erstes Ende (14; 34; 54) sowie ein zweites, dem ersten Ende (14; 34; 54) abgewandtes Ende (15; 35; 55) aufweist und an dessen Aussenseite (16) zumindest bereichsweise ein selbstschneidendes Gewinde (17) vorgesehen ist , wobei der Grundkörper (12; 32; 52) ein innenliegendes Angriffsmittel (18; 38; 58) für ein Setzwerkzeug sowie eine zum zweiten Ende (15; 35; 55) offene Aufnahme (19; 39) aufweist, die mit einem Lastangriffsmittel (20; 40) versehen ist, **dadurch gekennzeichnet, dass** radial aussen ein Bund (21; 41; 61) an dem zweiten Ende (15; 35; 55) des Grundkörpers (12; 32; 52) vorgesehen ist.

2. Befestigungselement nach Anspruch 1, **dadurch gekennzeichnet, dass** die radiale Erstreckung (E1; E2; E3) des Bundes (21; 41; 61) 8% bis 35% grösser als ein Kerndurchmesser (D1; D2; D3) des Grundkörpers (12; 32; 52) ist.

3. Befestigungselement nach Anspruch 1 oder 2, **dadurch gekennzeichnet, dass** der Bund (21; 41; 61) eine axiale Erstreckung (F1; F2; F3) aufweist, die 5% bis 15% des Kerndurchmesser (D1; D2; D3) des Grundkörpers (12; 32; 52) entspricht.

4. Befestigungselement nach einem der Ansprüche 1 bis 3, **dadurch gekennzeichnet, dass** der Bund (21; 41; 61) umfangseitig eine Aussenkontur (22; 42; 62) aufweist.

5. Befestigungselement nach einem der Ansprüche 1 bis 3, **dadurch gekennzeichnet, dass** der Bund (21; 41) eine, dem ersten Ende (14; 34; 54) zugewandte Anlageseite (23; 43) aufweist, die mit einer Kontur (24; 44) versehen ist.
